# DEMANDE DE BREVET EUROPEEN

(11) **EP 4 660 435 A1**
(43) Date de publication de la demande: **10.12.2025**
(21) Numéro de dépôt: 24315274.1
(22) Date de dépôt: 07.06.2024
(51) Int. Cl.: F02C 7/055, F02K 3/06, F02K 3/077

(54) **TURBOMACHINE D'AÉRONEF COMPRENANT UN SYSTÈME D'INTERCEPTION DE CORPS ÉTRANGERS ET PROCÉDÉ DE CAPTURE**

(71) Demandeur: SAFRAN AIRCRAFT ENGINES, 75015 Paris (FR); Safran Aero Boosters, 4041 Herstal (BE)
(72) Inventeur: Anton, Pierre Grégoire, 77550 MOISSY-CRAMAYEL (FR); Dieudonne, Sadim, 77550 MOISSY-CRAMAYEL (FR); Princivalle, Rémy Henri Pierre, 77550 MOISSY-CRAMAYEL (FR); Georges, Yannick, 77550 MOISSY-CRAMAYEL (FR); Marchand, Anthony, 77550 MOISSY-CRAMAYEL (FR)
(74) Mandataire: Argyma

(57) **Abrégé**

Une turbomachine à gaz (1) pour aéronef comprenant un système d'interception (5) d'au moins un corps étranger monté dans une zone intérieure (Z1), le système d'interception (5) comprenant : un logement borgne (51) formé dans une paroi intérieure (41) d'un carter (4) délimitant extérieurement la zone intérieure (Z1), et destiné à recevoir le corps étranger ; une porte d'accès (52) au logement borgne (51) configurée pour évoluer entre une position fermée (P0) dans laquelle elle forme en partie la paroi intérieure (41), et une position ouverte ; et un organe de liaison mécanique (53), reliant la porte d'accès (52) au carter (4), configuré, d'une part, pour maintenir par défaut la porte d'accès (52) dans la position fermée (P0) et, d'autre part, pour ouvrir la porte d'accès (52) dans la position ouverte suite à l'application d'un effort par le corps étranger sur la porte d'accès (52).

## Description

### DOMAINE TECHNIQUE

La présente invention concerne le domaine des turbomachines d'aéronef et vise plus particulièrement un système de protection d'une turbomachine à l'encontre des corps étrangers comme des oiseaux.

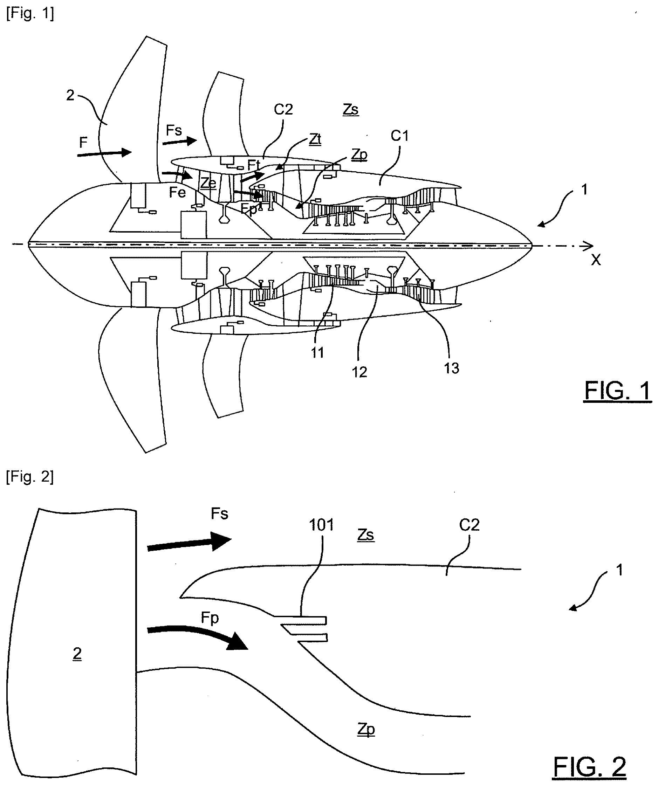

De manière connue, un aéronef comprend une ou plusieurs turbomachines pour permettre son déplacement à partir de l'accélération d'un flux d'air d'amont vers l'aval. Pour cela, en référence à la figure 1, la turbomachine 1 comprend un organe propulsif 2 monté sur un arbre de propulsion, qui convertit le mouvement de rotation en un flux d'air F qui permet la propulsion de l'aéronef.

Pour entrainer la rotation de l'organe propulsif 2, la turbomachine 1 comprend successivement suivant un axe de turbomachine X, au moins un compresseur 11, une chambre de combustion 12 et au moins une turbine 13. Le compresseur 11 est configuré pour recevoir un flux d'air entrant, correspondant dans cet exemple à une partie du flux d'air issu de l'organe propulsif 2, et le comprimer de manière à alimenter la chambre de combustion 12. La combustion, dans la chambre de combustion 12, entre un flux de carburant et le flux d'air comprimé génère un flux d'air d'échappement qui entraine la turbine 13 en rotation, entrainant la rotation de l'arbre de propulsion. Ce dernier entraine à son tour le compresseur 11 et l'organe propulsif 2.

Dans le cas d'une turbomachine à trois flux (comme représenté sur la figure 1), le compresseur 11, la chambre de combustion 12 et la turbine 13 forment une zone primaire Zp de circulation d'un flux d'air primaire Fp, appelée aussi veine primaire. La zone primaire Zp est délimitée extérieurement par un premier carter C1. La turbomachine 1 comprend également une zone secondaire Zs de circulation d'un flux d'air secondaire Fs accéléré par l'organe propulsif 2. La zone secondaire Zs n'est pas délimitée extérieurement par un carter. La zone secondaire Zs est uniquement délimitée intérieurement par un deuxième carter C2, communément désigné carter intermédiaire.

En pratique, la turbomachine 1 comprend une zone d'entrée Ze, appelée aussi veine d'entrée, qui se divise entre la zone primaire Zp et une zone tertiaire Zt, appelée aussi veine tertiaire. La zone tertiaire Zt est positionnée entre la zone primaire Zp et la zone secondaire Zs comme illustré à la figure 1. La zone tertiaire Zt est délimitée intérieurement par le premier carter C1 et extérieurement par le deuxième carter C2. Comme illustré à la figure 1, en aval de l'organe propulsif 2, le deuxième carter C2 délimite extérieurement la zone d'entrée Ze puis la zone tertiaire Zt.

Le flux d'air F généré par l'organe propulsif 2 est divisé, dans un premier temps, en un flux d'air d'entrée Fe circulant dans la zone d'entrée Ze et le flux d'air secondaire Fs extérieur circulant dans la zone secondaire Zs. Le flux d'air d'entrée Fe se divise ensuite en un flux d'air primaire Fp qui circule dans la zone primaire Zp pour être consommé dans la chambre de combustion 12, et un flux d'air tertiaire Ft qui circule dans la zone tertiaire Zt pour assurer diverses fonctions telles que le refroidissement d'échangeurs, la propulsion, etc.

Lorsque l'aéronef est en vol, des corps étrangers, comme des oiseaux par exemple, peuvent être aspirés par l'organe propulsif 2 et pénétrer dans la zone d'entrée Ze, ce qui engendre des endommagements de la turbomachine.

En pratique, dans une turbomachine à double flux du type turboréacteur, les corps étrangers sont, le plus souvent, broyés par l'organe propulsif 2 dont la vitesse est élevée et les débris sont évacués par un canal d'évacuation, positionné dans la zone primaire Zp au sein du compresseur 11 et débouchant dans la zone secondaire Zs.

On connait également du document EP 3913231A1, une turbomachine d'aéronef à double flux, dont une vue rapprochée est représentée sur la figure 2, qui comprend une pluralité de rainures 101, formées dans le carter intermédiaire et débouchant dans la zone primaire Zp en amont du compresseur. La zone primaire Zp possède un diamètre décroissant selon le sens de circulation du flux d'air dans la zone primaire Zp d'amont en aval, formant une région de rétrécissement de la zone primaire Zp, connue sous la désignation « col de cygne ». Les rainures 101 sont formées dans le col de cygne et forment un piège pour la capture des débris. Les débris se coincent dans les rainures 101 et ne peuvent pas circuler plus en aval dans la zone primaire Zp.

Cependant, les rainures du document EP 3913231A1 ne permettent pas la capture de débris de dimensions importantes. Aussi, il existe un risque que des corps étrangers comme des oiseaux entiers par exemple circulent dans la zone primaire Zp et parviennent jusqu'au compresseur, ce qui peut endommager la turbomachine 1.

Pour palier cet inconvénient, il est connu de surdimensionner les éléments de la turbomachine, en particulier les aubes du (ou des) compresseurs, ce qui entraine une augmentation des dimensions du carter intermédiaire et donc de sa masse. Une masse importante entraine une augmentation des contraintes sur les paliers, ainsi qu'une augmentation de la consommation de carburant de l'aéronef et donc de ses émissions de gaz à effets de serre. Par ailleurs, un surdimensionnement de la turbomachine à gaz ne permet pas de s'affranchir, de manière certaine, de tout risque d'extinction de la chambre de combustion en cas d'ingestion par la turbomachine d'un volume trop important de corps étrangers.

Dans le cas d'une turbomachine à triple flux, l'organe propulsif possède, de manière connue, une circonférence importante et un nombre limité d'aubes. Un tel organe propulsif tourne ainsi à des vitesses réduites afin de ne pas atteindre des vitesses soniques en tête des aubes. Aussi, dans une turbomachine à triple flux, les faibles vitesses de rotation de l'organe propulsif ne permettent pas de broyer les corps étrangers de manière satisfaisante avant leur entrée dans la zone d'entrée de la turbomachine, ce qui accentue les inconvénients précités.

L'invention vise ainsi à éliminer au moins certains de ces inconvénients en proposant une turbomachine d'aéronef fiable et efficace permettant de s'affranchir de tout risque d'ingestion d'un corps étranger. L'invention vise en particulier une turbomachine comprenant un tel système d'interception d'un corps étranger ayant un encombrement et une masse limités. L'invention trouve en particulier un intérêt dans la turbomachine à triple flux pour limiter tout risque d'endommagement.

### PRESENTATION DE L'INVENTION

L'invention concerne une turbomachine à gaz pour aéronef comprenant un carter délimitant une zone intérieure de circulation d'un premier flux d'air et une zone extérieure de circulation d'un deuxième flux d'air, le carter comprenant une paroi radialement intérieure, délimitant extérieurement la zone intérieure, et une paroi radialement extérieure, délimitant intérieurement la zone extérieure, la turbomachine à gaz comprenant au moins un compresseur, une chambre de combustion et au moins une turbine, le premier flux d'air circulant d'un amont vers un aval selon un axe de turbomachine dans la zone intérieure au moins pour alimenter la chambre de combustion, le système d'interception est monté dans la zone intérieure en amont du compresseur. La turbomachine à gaz est remarquable en ce qu'elle comprend au moins un système d'interception d'au moins un corps étranger comprenant :
- un logement borgne formé dans la paroi intérieure du carter, le logement borgne comprenant une portion de stockage destinée à recevoir le corps étranger,
- une porte d'accès au logement borgne, la porte d'accès étant configurée pour évoluer entre :
   - une position fermée dans laquelle elle forme en partie la paroi intérieure du carter, et
   - une position ouverte dans laquelle la paroi intérieure du carter est discontinue, permettant l'accès au logement borgne,
- un organe de liaison mécanique, reliant la porte d'accès au carter, configuré, d'une part, pour maintenir par défaut la porte d'accès dans la position fermée et, d'autre part, pour ouvrir la porte d'accès dans la position ouverte suite à l'application d'un effort par le corps étranger sur la porte d'accès.

Le système d'interception selon l'invention, permet de capturer des corps étrangers, sans affecter l'aérodynamisme de la zone intérieure et les performances de la turbomachine. La porte d'accès permet de fermer le logement borgne en s'intégrant à la paroi intérieure du carter. Ainsi, lorsque la porte d'accès est dans la position fermée, le premier flux d'air circule normalement dans la zone intérieure, de manière analogue à une turbomachine exempte de système d'interception. Ainsi la turbomachine comprend un système d'interception de corps étranger tout en assurant un rendement optimal pour la propulsion de l'aéronef.

L'organe de liaison mécanique configuré pour maintenir par défaut la porte d'accès dans la position fermée permet de s'assurer de cette position en cas de défaillance par exemple. Un fonctionnement optimal de la turbomachine est ainsi avantageusement assuré en l'absence de toute action sur le système d'interception. La porte d'accès reste avantageusement fermée lors de l'ingestion de corps étrangers de faibles dimensions qui peuvent être ingérés sans risque pas la turbomachine. En effet, ces derniers n'ont pas une masse suffisante pour ouvrir la porte d'accès.

De même, un simple effort dû à l'impact d'un corps étranger suffit à ouvrir la porte d'accès, qui est assimilable à une trappe ou à une porte battante, de type « porte western ». Aussi, l'effort dû au corps étranger, projeté sur la porte d'accès du fait de la vitesse de déplacement de l'aéronef, est suffisant pour permettre l'accès au logement borgne et l'organe mécanique permet un retour de la porte d'accès dans la position fermée pour refermer le logement automatiquement après la capture du corps étranger. Il n'est ainsi pas nécessaire pour le pilote ou un opérateur de procéder à une quelconque manœuvre pour ouvrir ou refermer la porte d'accès et le corps étranger est automatiquement emprisonné dans le logement borgne dès lors qu'il pénètre en entrée de la zone intérieure.

Ainsi, même après la capture du corps étranger, la paroi intérieure du carter est continue et le premier flux d'air peut circuler dans la zone intérieure. Le corps étranger est intercepté et ne présente aucun risque d'endommagement de la turbomachine.

Un positionnement en amont du compresseur permet de s'assurer qu'aucun corps étranger n'affecte les performances de compression, ce qui garantit un rendement optimal de la turbomachine.

De manière préférée, la turbomachine à gaz comprenant successivement selon l'axe de turbomachine un compresseur basse pression et un compresseur haute pression, le système d'interception est monté dans la zone intérieure en amont des compresseurs. De préférence, le système d'interception est monté dans la zone intérieure entre l'organe propulsif et le compresseur basse pression, ce qui permet de s'assurer de ne pas affecter les performances des compresseurs.

De manière préférée, la zone intérieure se présente sous la forme d'une veine intérieure comprenant une portion de rétrécissement, le système d'interception est monté dans la portion de rétrécissement. Par l'expression « portion de rétrécissement », on entend que la zone intérieure possède un diamètre décroissant depuis une entrée d'air. Une telle portion de rétrécissement confère à la veine intérieure un aspect qui se rapproche de l'axe moteur et est connue de l'homme du métier sous la désignation « col de cygne ». Un tel col de cygne possède une courbure et un point d'inflexion qui dirige le flux d'air vers le compresseur tout en permettant à un corps étranger, dont la masse génère une inertie plus importante, d'être projeté contre la paroi intérieure du carter. La porte d'accès localisée dans la portion de rétrécissement dans la paroi intérieure est ainsi positionnée de manière optimale pour que le corps étranger projeté contre la paroi intérieure vienne s'écraser contre la porte d'accès, générant un effort suffisamment important pour ouvrir ladite porte d'accès et pour que le corps étranger soit capturé dans le logement borgne. La porte d'accès forme ainsi un obstacle naturel pour un corps étranger dans la zone intérieure étant donné qu'elle s'étend en partie orthogonalement au flux d'air incident.

Dans une forme de réalisation, la turbomachine à gaz est exempte de vanne de décharge en amont du compresseur, la vanne de décharge étant configurée pour créer un canal de circulation d'un flux d'air de décharge depuis la zone intérieure vers la zone extérieure.

De manière préférée, l'organe de liaison mécanique est un organe passif. Cela permet de s'affranchir d'un risque de défaillance du système d'interception, ce qui permet de s'assurer de la capture d'un corps étranger qui serait présent en aval de l'organe propulsif. En effet, grâce à un organe passif, il n'est par exemple pas nécessaire d'utiliser une alimentation électrique pour activer la porte d'accès dans une position ouverte ou fermée. Cela permet de s'affranchir d'un risque de défaut d'alimentation. L'organe de liaison mécanique passif permet de s'assurer de la position fermée de la porte d'accès par défaut et donc d'une circulation optimale du premier flux d'air dans la zone intérieure en toute circonstance.

Dans une forme de réalisation, l'organe de liaison mécanique comporte un ressort. Un ressort permet de relier la porte d'accès au carter de manière simple en s'assurant que la porte d'accès soit maintenue dans la position fermée par défaut. De plus, il est simple d'adapter un ressort en fonction d'un couple (ou d'une tension) souhaité pour s'assurer d'un compromis entre un couple suffisant pour conserver la porte d'accès dans la position fermée malgré les efforts aérodynamiques appliqués contre la porte d'accès dus au premier flux d'air entrant dans la zone intérieure, et un couple inférieur à un effort d'impact d'un corps étranger, de manière à s'assurer de l'ouverture de la porte d'accès en cas d'impact par un corps étranger. Le couple ou la tension du ressort peut ainsi être adapté à la masse du corps étranger que l'on souhaite accueillir dans le logement borgne.

De manière préférée, le ressort est un ressort hélicoïdal possédant un couple de ressort, le couple de ressort est compris entre 1000 et 3000 N.m. Un tel couple est avantageusement supérieur aux efforts aérodynamiques appliqués par le premier flux d'air dans la zone intérieure sur la paroi intérieure du carter tout en étant inférieure à l'effort produit par l'impact d'un corps étranger, par exemple un oiseau.

Dans une forme de réalisation, en position fermée, la porte d'accès forme une surface aérodynamique continue avec la paroi intérieure du carter, permettant de s'assurer que la turbomachine comprenant le système d'interception conserve un rendement optimal.

Dans une forme de réalisation, le logement borgne possède une forme annulaire qui s'étend ainsi sur toute la circonférence de la paroi intérieure du carter.

De manière alternative, le système d'interception comprend une pluralité de logements borgnes répartis sur la circonférence de la paroi intérieure du carter. De préférence, le carter comportant une pluralité de bras structuraux de liaison s'étendant radialement intérieurement depuis le carter, le système d'interception comprend une pluralité de logements borgnes, chaque logement borgne étant formé entre deux bras structuraux, de manière à s'assurer de l'interception d'un corps étranger quelle que soit sa position angulaire.

Dans une forme de réalisation, la portion de stockage comprend une capacité de stockage d'un corps étranger supérieure à 1L, de préférence supérieure à 3L. Cela permet de stocker un volume important de corps étrangers, par exemple un oiseau entier qui n'a pas été broyé lors de son passage dans l'organe propulsif, à la différence des systèmes de l'art antérieur qui visent le stockage de débris.

Dans une forme de réalisation, la portion de stockage possède une hauteur de stockage, définie radialement par rapport à l'axe de turbomachine, comprise entre 80 et 220 mm. Une telle hauteur permet la capture de corps étrangers importants, comme par exemple des oiseaux entiers, à la différence des systèmes de l'art antérieur qui permettent de capturer uniquement des débris.

Selon un aspect préféré, la portion de stockage possède une longueur de stockage, définie selon l'axe de turbomachine, comprise entre 1 et 1,5 fois la hauteur de stockage. Une telle longueur permet un espace de stockage suffisamment important pour stocker plusieurs corps étrangers sans gêner l'ouverture de la porte d'accès.

Dans une forme de réalisation, le système d'interception comprend un dispositif de détection d'occurrences d'ouverture de la porte d'accès. Un tel dispositif de détection permet au pilote d'être informé de la capture d'un ou plusieurs corps étrangers. Cela permet en particulier de détecter une fréquence d'occurrences importante signifiant une quantité importante de corps étrangers interceptés. Cela permet de prévoir une opération de nettoyage uniquement lorsque cela est nécessaire.

De manière préférée, le système d'interception comprend un dispositif de mesure de la masse de corps étrangers présents dans le logement borgne. Un tel dispositif de mesure permet avantageusement de détecter un nombre important de corps étrangers capturés dans le logement borgne. Il est ainsi possible de prévoir une opération de maintenance pour vider le logement borgne et le préparer par exemple pour un prochain vol. Le dispositif de mesure permet ainsi de s'assurer de la capture ultérieure d'un corps étranger.

L'invention concerne également un procédé de capture d'un corps étranger dans une turbomachine à gaz telle que décrite précédemment, au moyen du système d'interception, l'organe de liaison mécanique maintenant initialement par défaut la porte d'accès dans la position fermée, le procédé comprend les étapes consistant à :
- appliquer un effort, par le corps étranger, sur la porte d'accès, et
- déplacer la porte d'accès dans la position ouverte, le corps étranger étant stocké dans la portion de stockage du logement borgne.

Dans un mode de mise en œuvre, le procédé de capture comprend postérieurement une étape consistant à déplacer automatiquement la porte d'accès dans la position fermée suite à l'arrêt de l'application de l'effort par le corps étranger sur la porte d'accès.

L'invention concerne également une turbomachine à gaz pour aéronef comprenant :
- un premier carter délimitant une zone intérieure de circulation d'un flux d'air intérieure et une zone secondaire de circulation d'un flux d'air secondaire, et
- un deuxième carter monté dans la zone intérieure et délimitant, dans la zone intérieure, une zone primaire de circulation d'un flux d'air primaire et une zone tertiaire de circulation d'un flux d'air tertiaire, le flux d'air primaire étant configuré pour alimenter une chambre de combustion de la turbomachine, le flux d'air intérieur étant divisé, dans la zone intérieure, entre le flux d'air primaire et le flux d'air tertiaire,
- le premier carter comprenant une paroi radialement intérieure, délimitant extérieurement la zone intérieure, et une paroi radialement extérieure, délimitant intérieurement la zone secondaire.

La turbomachine à gaz est remarquable en ce qu'elle comprend un système d'interception d'au moins un corps étranger comprenant :
- un logement borgne formé dans la paroi intérieure du premier carter, le logement borgne comprenant une portion de stockage destinée à recevoir le corps étranger,
- une porte d'accès au logement borgne, la porte d'accès étant configurée pour évoluer entre :
   - une position fermée dans laquelle elle forme en partie la paroi intérieure du premier carter, et
   - une position ouverte dans laquelle la paroi intérieure du premier carter est discontinue, permettant l'accès au logement borgne,
- un organe de liaison mécanique, reliant la porte d'accès au carter, configuré, d'une part, pour maintenir par défaut la porte d'accès dans la position fermée et, d'autre part, pour ouvrir la porte d'accès dans la position ouverte suite à l'application d'un effort par le corps étranger sur la porte d'accès.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'une turbomachine d'aéronef.
La figure 2 est une représentation schématique d'une entrée de la turbomachine de la figure 1 selon l'art antérieur.
La figure 3 est une représentation schématique d'une turbomachine d'aéronef selon une forme de réalisation de l'invention comprenant un système d'interception d'un corps étranger.
La figure 4 est une vue rapprochée du système d'interception de la figure 3 dans une position fermée.
La figure 5 est une représentation schématique du système d'interception de la figure 4 et d'un corps étranger.
La figure 6 est une représentation schématique du système d'interception de la figure 4 dans une position ouverte pendant l'interception d'un corps étranger.
La figure 7 est une représentation schématique du système d'interception de la figure 4 après l'interception d'un corps étranger.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

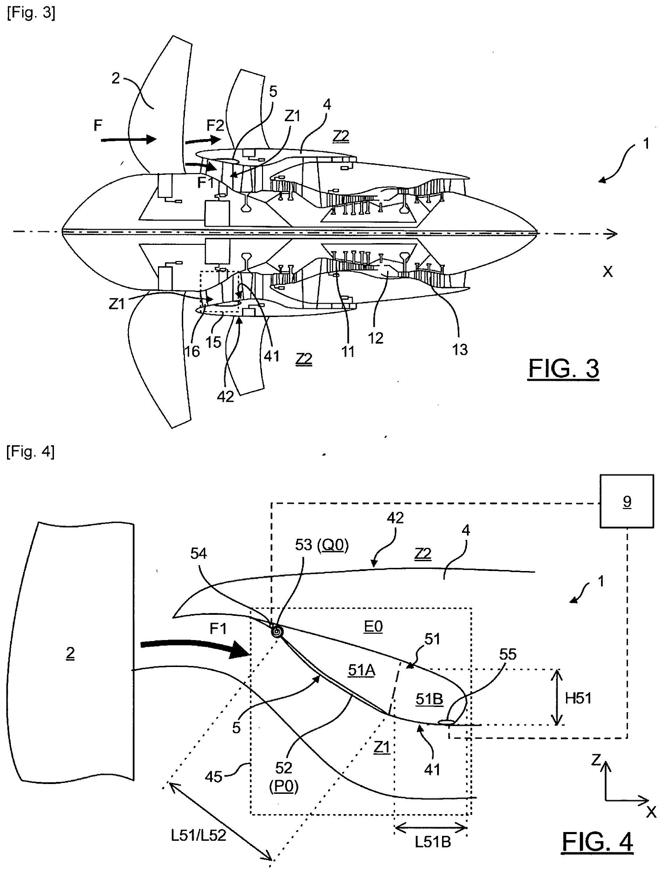

Il est représenté sur la figure 3, une turbomachine 1 destinée à être montée dans un aéronef pour permettre son déplacement à partir de l'accélération d'un flux d'air d'amont en aval. Dans cet exemple, la turbomachine 1 s'étend longitudinalement selon un axe de turbomachine X. Autrement dit, le flux d'air circule dans la turbomachine 1 d'amont en aval selon l'axe de turbomachine X. Pour cela, la turbomachine 1 comprend un organe propulsif 2, monté sur un arbre de propulsion, qui convertit le mouvement de rotation en un flux d'air F qui permet la propulsion de l'aéronef. Il est décrit dans ce document l'exemple d'une turbomachine dans laquelle le flux d'air entrant est axisymétrique. Il va de soi que l'entrée d'air dans la turbomachine pourrait alternativement être non-axisymétrique, comme par exemple une entrée d'air d'un moteur militaire, par exemple un turbopropulseur de type TP400.

Pour entrainer la rotation de l'organe propulsif 2, la turbomachine 1 comprend successivement suivant l'axe de turbomachine X, un ou plusieurs compresseur(s) 11, une chambre de combustion 12 et une ou plusieurs turbine(s) 13. Il va de soi que la turbomachine 1 pourrait comprendre plusieurs arbres de propulsion.

En pratique, dans cet exemple, la turbomachine 1 comprend successivement suivant l'axe de turbomachine X, un compresseur basse pression, un compresseur haute pression, une chambre de combustion 12, une turbine haute pression et une turbine basse pression. Par souci de concision, par la suite, le terme « compresseur 11 » désigne l'ensemble des deux compresseurs basse pression et haute pression dans le cas d'une telle turbomachine à gaz 1. Un positionnement en amont du compresseur 11 désigne ainsi un positionnement en amont du premier compresseur selon l'axe de turbomachine X, c'est-à-dire le compresseur monté directement en aval de l'organe propulsif 2.

Le compresseur 11 est configuré pour recevoir un flux d'air entrant, correspondant dans cet exemple à une partie du flux d'air issu de l'organe propulsif 2, et le comprimer de manière à alimenter la chambre de combustion 12. La combustion, dans la chambre de combustion 12, entre un flux de carburant et le flux d'air comprimé génère un flux d'air d'échappement qui entraine la turbine 13 en rotation, entrainant la rotation de l'arbre de propulsion. Ce dernier entraine à son tour le compresseur 11 et l'organe propulsif 2.

En pratique, toujours en référence à la figure 3, la turbomachine 1 comprend, en aval de l'organe propulsif 2 au moins une zone intérieure Z1 et une zone extérieure Z2 délimitée par un carter 4 pour la circulation de deux flux d'air distincts. Autrement dit, en aval de l'organe propulsif 2, le flux d'air F est divisé en un premier flux d'air F1, qui circule dans la zone intérieure Z1 et qui alimente au moins en partie la chambre de combustion 12, et un deuxième flux d'air F2 qui circule dans la zone extérieure Z2 et qui participe à la propulsion de l'aéronef.

Dans une turbomachine 1 à double flux (non représentée), comme cela est connu, le compresseur 11, la chambre de combustion 12 et la turbine 13 forment une zone primaire de circulation d'un flux d'air primaire, appelée aussi veine primaire. La turbomachine 1 comprend également une zone secondaire de circulation d'un flux d'air secondaire accéléré par l'organe propulsif 2, appelée aussi veine secondaire lorsqu'elle est délimitée extérieurement par un carter. La zone primaire et la zone secondaire sont annulaires et s'étendent radialement autour de l'arbre de propulsion, la zone secondaire s'étendant radialement extérieurement à la zone primaire autour du carter 4. Autrement dit, dans cette forme de réalisation, la zone intérieure Z1 correspond à la zone primaire (le premier flux d'air F1 correspondant au flux d'air primaire qui aliment la chambre de combustion 12), et la zone extérieure Z2 correspond à la zone secondaire (le deuxième flux d'air F2 correspondant au flux d'air secondaire).

Dans une turbomachine 1 à triple flux, comme représenté sur la figure 3, celle-ci comprend, directement en aval de l'organe propulsif 2 un premier carter qui délimite une zone d'entrée appelée aussi veine d'entrée, dans laquelle circule un flux d'entrée, et une zone secondaire, qui s'étend radialement extérieurement à la zone d'entrée et dans laquelle circule un flux d'air secondaire. La zone secondaire n'est pas délimitée extérieurement par un carter. La zone secondaire est uniquement délimitée intérieurement. La zone d'entrée se divise entre la zone primaire et une zone tertiaire, appelée aussi veine tertiaire. La zone tertiaire s'étend radialement entre la zone primaire et la zone secondaire. De manière analogue à une turbomachine double flux, le compresseur 11, la chambre de combustion 12 et la turbine 13 forment la zone primaire dans laquelle circule un flux d'air primaire. Aussi, en aval de l'organe propulsif 2, le flux d'air d'entrée est divisé en un flux d'air primaire qui circule dans la zone primaire pour alimenter la chambre de combustion 12 et un flux d'air tertiaire qui circule dans la zone tertiaire. Autrement dit, dans cette forme de réalisation, la zone intérieure Z1 correspond, de préférence, à la zone d'entrée (le premier flux d'air F1 correspondant au flux d'air d'entrée qui se divise par la suite en le flux d'air primaire et le flux d'air tertiaire), et la zone extérieure Z2 correspond à la zone secondaire (le deuxième flux d'air F2 correspondant au flux d'air secondaire).

Dans cet exemple, la turbomachine 1 est non carénée, c'est-à-dire qu'elle est exempte d'une nacelle extérieure. Autrement dit, la zone extérieure (ici la zone secondaire) est ouverte vers l'extérieur. Il va de soi que l'invention s'applique également pour une turbomachine différente, par exemple une turbomachine carénée comme un turboréacteur.

Comme décrit précédemment, le carter 4 est monté entre la zone intérieure Z1 et la zone extérieure Z2. Plus précisément, en référence à la figure 4, le carter 4 comprend une paroi radialement intérieure 41, qui délimite extérieurement la zone intérieure Z1, et une paroi radialement extérieure 42, qui délimite intérieurement la zone extérieure Z2.

De manière préférée, le carter intermédiaire 4 est fabriqué dans un matériau d'alliage métallique, permettant une turbomachine 1 légère et robuste. Il va de soi que le carter intermédiaire 4 pourrait alternativement être fabriqué dans un matériau composite par exemple à matrice organique.

Dans cet exemple, la zone intérieure Z1 comprend une portion de rétrécissement 15, représentée sur les figures 3 et 4. De préférence, la portion de rétrécissement 15 est positionnée dans la zone intérieure Z1 entre une pluralité d'aubes de stator 16 (représentées sur la figure 3), qui redressent le premier flux d'air F1 en entrée de la zone intérieure Z1. En pratique, le diamètre de la zone intérieure Z1 dans la portion de rétrécissement 15 diminue de l'amont vers l'aval. Une telle portion de rétrécissement 15 est connue de l'homme du métier sous la désignation « col de cygne ».

De manière préférée, la turbomachine 1 est exempte de vanne de décharge de la zone intérieure Z1 en amont du compresseur 11. Comme cela est connu, une telle vanne de décharge est configurée transférer une partie du premier flux d'air F1 dans la zone extérieure Z2 pour adapter le débit de chaque flux d'air avant d'entrer dans la compresseur 11. Il va de soi que la turbomachine 1 selon l'invention pourrait comprendre une telle vanne de décharge. De préférence, dans la forme de réalisation dans laquelle la turbomachine 1 est une turbomachine à double flux, celle-ci est exempte de vanne de décharge en amont du compresseur 11 configurée pour créer un canal de circulation d'un flux d'air de décharge depuis la zone intérieure Z1 (zone primaire) vers la zone extérieure Z2 (zone secondaire) en amont du compresseur 11 afin d'adapter le taux de dilution et limiter le phénomène de pompage.

Toujours en référence aux figures 3 et 4, la turbomachine 1 selon l'invention comprend un ou plusieurs système(s) d'interception 5 d'un (ou plusieurs) corps étranger(s) CO, par exemple un oiseau.

Selon un aspect de l'invention, le système d'interception 5 est monté dans la zone intérieure Z1. De préférence, le système d'interception 5 est monté en amont du compresseur 11. Plus précisément, le système d'interception 5 est de préférence monté à l'entrée de la zone intérieure Z1, dans la portion de rétrécissement 15. Autrement dit, le système d'interception 5 est monté, de préférence, entre l'organe propulsif 2 et le compresseur 11. Autrement dit, dans le cas d'une turbomachine comprenant plusieurs compresseurs 11, le système d'interception 5 est monté de préférence directement en aval de l'organe propulsif 2, c'est-à-dire entre l'organe propulsif 2 et le premier compresseur 11. Un tel positionnement permet une capture optimale d'un corps étranger CO entrainé par un premier flux d'air F1 entrant dans la zone intérieure Z1 selon une direction longitudinale d'amont en aval, comme cela sera décrit plus en détails par la suite.

Dans une forme de réalisation, la turbomachine 1 comprend une pluralité de systèmes d'interception 5 répartis annulairement dans le carter 4 autour de la zone intérieure Z1. En particulier, dans le cas d'une turbomachine 1 à triple flux, celle-ci comprend une pluralité de bras structuraux qui s'étendent radialement et relient le carter 4 au reste de la turbomachine 1, la pluralité de bras structuraux étant répartis circonférentiellement de manière homogène. Un système d'interception 5 s'étend, de préférence, entre chaque couple de deux bras structuraux adjacents. De manière alternative, la turbomachine 1 comprend un unique système d'interception 5 de forme annulaire, qui s'étend circonférentiellement dans l'ensemble le carter 4 en périphérie de la zone intérieure Z1.

La figure 4 représente une vue rapprochée d'un système d'interception 5 selon une forme de réalisation de l'invention. Plus précisément, la figure 4 représente une vue dans un plan de coupe longitudinal (X, Z). Dans cet exemple, par souci de clarté, dans le plan de coupe (X, Z), l'axe Z, orthogonal à l'axe de turbomachine X, s'étend verticalement.

Selon un aspect de l'invention, le système d'interception 5 comprend un logement borgne 51 formé dans le carter 4, une porte d'accès 52 au logement borgne 51 et un organe de liaison mécanique 53 qui relie la porte d'accès 52 au carter 4.

Plus précisément, le logement borgne 51 est formé dans la paroi intérieure 41 du carter 4, c'est-à-dire qu'il est ouvert vers la zone intérieure Z1. Le logement borgne 51 est destiné à recevoir le corps étranger CO. Dans cet exemple, en référence à la figure 4, le logement borgne 51 définit une ouverture dans la paroi intérieure 41 dont les deux extrémités amont et aval sont écartées d'une longueur L51 comprise entre 100 mm et 350 mm, permettant le passage de corps étrangers CO de dimensions plus importantes que des débris.

Dans une forme de réalisation préférée, le logement borgne 51 possède une forme sensiblement allongée vers l'aval selon l'axe de turbomachine X, comme représenté sur la figure 4. Autrement dit, le logement borgne 51 forme sensiblement une poche opposée à l'ouverture dans la paroi intérieure 41, de manière à permettre la rétention des corps étrangers CO une fois ces derniers capturés.

En pratique, dans cet exemple, le logement borgne 51 comprend, sensiblement successivement de l'amont vers l'aval, une portion de débattement 51A de la porte d'accès 52 et une portion de stockage 51B pour le stockage des corps étrangers CO.

La portion de débattement 51A possède de préférence une longueur selon l'axe de turbomachine X sensiblement égale à une longueur de la porte d'accès 52, pour permettre à cette dernière de s'ouvrir et de se fermer, sans que le ou les corps étrangers CO stocké(s) dans la portion de stockage 51B n'entrave(nt) ce mouvement. En pratique, la porte d'accès 52 étant de préférence une porte battante, comme cela sera décrit plus en détails par la suite, la dimension de la portion de débattement 51A est, de préférence, sensiblement égale à une longueur de la porte d'accès 52, qui correspond à un rayon depuis l'extrémité amont de l'ouverture définie dans la paroi intérieure 41 et décrite précédemment.

La portion de stockage 51B s'étend selon l'axe de turbomachine X en aval de la portion de débattement 51A et est configurée pour assurer la rétention des corps étrangers CO capturés. La figure 4 représentant une vue en coupe longitudinale du logement borgne 51, ce dernier s'étend longitudinalement selon l'axe de turbomachine X et, dans cet exemple, verticalement selon un axe vertical Z, orthogonal à l'axe de turbomachine X, définissant un plan de coupe (X, Z). Dans le plan de coupe (X, Z), la portion de stockage 51B possède, de préférence une hauteur de stockage H51B selon l'axe vertical Z supérieure à 80mm pour permettre le stockage de corps étrangers CO de dimensions plus importantes que des débris. De manière préférée, la hauteur de stockage H51B de la portion de stockage 51B est inférieure à 220 mm, de préférence inférieure à 140 mm, afin de limiter le volume radial du logement borgne 51.

De même, dans une forme de réalisation préférée, la portion de stockage 51B possède une longueur de stockage L51B définie selon l'axe de turbomachine X, comprise entre 1 et 1,5 fois la hauteur de stockage H51B de la portion de stockage 51B définie précédemment. De préférence, la longueur de stockage L51B est comprise entre 80 et 330mm. Dans cet exemple, la longueur de stockage L51B est comprise entre 100 et 150mm. En pratique, de manière préférée, la portion de stockage 51B comprend une capacité de stockage d'un corps étranger CO supérieure à 1L, de préférence encore supérieure à 3L. La portion de stockage 51B est ainsi dimensionnée de manière à permettre l'ingestion de corps étrangers CO dont l'encombrement est important, comme par exemple plusieurs oiseaux entiers, tout en s'assurant de ne pas altérer la résistance mécanique du carter intermédiaire 4. Les dimensions de la portion de stockage 51B permettent en outre un tel stockage sans gêner l'ouverture et la fermeture de la porte d'accès 52.

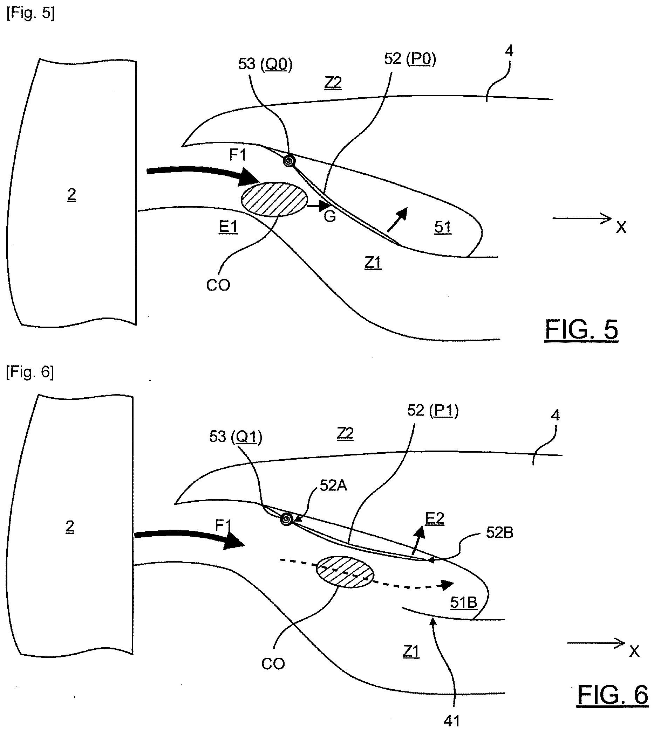

Toujours en référence à la figure 4, la porte d'accès 52 permet l'accès au logement borgne 51. Plus précisément, la porte d'accès 52 est configurée pour évoluer entre une position fermée P0 (représentée sur la figure 4), dans laquelle elle forme en partie la paroi intérieure 41 du carter 4, et une position ouverte P1 (représentée sur la figure 6), dans laquelle la paroi intérieure 41 du carter 4 est discontinue, permettant l'accès à l'intérieur du logement borgne 51.

De manière, préférée, la porte d'accès 52 forme, dans la position fermée P0, une surface continue avec la paroi intérieure 41 du carter 4, de manière à s'affranchir de toute perturbation du premier flux F1 dans la zone intérieure Z1, malgré la formation du logement borgne 51 dans le carter 4. Pour cela, la porte d'accès 52 possède de préférence une forme allongée et concave pour compléter la paroi intérieure 41 du carter 4 dans la portion de rétrécissement 15 au niveau du logement borgne 51. Autrement dit, la porte d'accès 52 possède, de préférence, une forme aérodynamique qui complète la paroi intérieure 41 du carter 4 au niveau du logement borgne 51.

En pratique, la porte d'accès 52 possède une longueur L52 (représentée sur la figure 4), définie selon l'axe reliant les deux extrémités de l'ouverture du logement borgne 51. De préférence, la longueur L52 de la porte d'accès 52 est sensiblement similaire à la longueur L51 de l'ouverture formée par le logement borgne 51 dans la paroi intérieure 41. Cela permet de s'assurer de la continuité de la paroi intérieure 41 du carter 4 lorsque la porte d'accès 52 est dans la position fermée P0.

Dans cet exemple, la porte d'accès 52 est fabriquée dans un matériau composite, par exemple à matrice organique, de manière à former une porte d'accès 52 mécaniquement résistance, en particulier résistante aux chocs. Il va de soi que la porte d'accès 52 pourrait alternativement être fabriquée dans un matériau différent, par exemple un alliage métallique.

De préférence, la porte d'accès 52 comprend un joint périphérique d'étanchéité pour limiter les perturbations du premier flux d'air F1.

En référence aux figures 4 à 6, l'organe de liaison mécanique 53 relie la porte d'accès 52 au carter 4. Dans cet exemple, comme représenté sur la figure 6, la porte d'accès 52 possède une première extrémité 52A reliée mécaniquement au carter 4 par l'organe de liaison mécanique 53, et une extrémité libre 52B, de manière à former une porte d'accès 52 battante.

Selon un aspect de l'invention, l'organe de liaison mécanique 53 est configuré, d'une part, pour maintenir par défaut la porte d'accès 52 dans la position fermée P0 (comme représenté sur la figure 4) et, d'autre part, pour ouvrir la porte d'accès 52 dans la position ouverte P1 suite à l'application d'un effort G par le corps étranger CO sur la porte d'accès 52 (comme représenté sur la figure 5). Autrement dit, grâce à l'organe de liaison mécanique 53, la porte d'accès 52 est par défaut dans la position fermée P0, pour permettre une circulation optimale du premier flux d'air F1 dans la zone intérieure Z1, lorsqu'aucun corps étranger CO ne pénètre en entrée de la zone intérieure Z1.

De manière préférée, l'organe de liaison mécanique 53 est un organe passif, permettant de s'assurer que la porte d'accès 52 est positionnée par défaut dans la position fermée P0, à la différence par exemple d'un organe nécessitant une alimentation électrique. Dans cet exemple, l'organe de liaison mécanique 53 comprend un ressort. Par exemple, l'organe de liaison mécanique 53 se présente sous la forme d'une charnière dans laquelle est monté un ressort, dans cet exemple un ressort hélicoïdal. Il va de soi que l'organe de liaison mécanique 53 pourrait alternativement se présenter sous une forme différente, par exemple un vérin pneumatique dont la compressibilité du fluide permettrait de jouer le rôle de ressort.

Aussi, dans cet exemple, l'organe de liaison mécanique 53 comprenant un ressort, est configuré pour évoluer entre un état de repos Q0 (représenté sur les figures 4 et 5), par défaut, dans lequel le ressort n'est pas sollicité et la porte d'accès 52 est dans la position fermée P0, et un état contraint Q1 (représenté sur la figure 6), dans lequel la porte d'accès 52 est dans la position ouverte P1. Dans cet exemple dans lequel le ressort est un ressort hélicoïdal, celui-ci possède un couple de ressort compris entre 1000 et 3000 N.m. Le couple de ressort est ainsi supérieur aux efforts aérodynamiques appliqués par le premier flux d'air F1 dans la zone intérieure Z1 sur la paroi intérieure 41, ce qui permet de maintenir la porte d'accès 52 dans la position fermée P0, malgré l'effort appliqué par le flux d'air entrant. Le couple de ressort est également, de préférence, inférieur à l'effort produit par l'impact d'un corps étranger CO volumineux, par exemple un oiseau. Dans cet exemple, l'impact d'un corps étranger CO génère sur la porte d'accès 52 un effort compris entre 5000 N et 15000 N, comme cela sera décrit plus en détails par la suite.

Il est décrit un organe de liaison mécanique 53 relié au carter 4 au niveau de la première extrémité 52A, cependant, il va de soi que l'organe de liaison mécanique 53 pourrait alternativement être relié à l'extrémité libre 52B de la porte d'accès 52 pour la placer dans la positon fermée P0 par un effort de tension prédéterminé par exemple. La première extrémité 52A de la porte d'accès 52 serait, dans cette forme de réalisation, reliée mécaniquement au carter 4 par exemple par une charnière simple.

Dans une forme de réalisation, en référence à la figure 4, le système d'interception 5 comprend un dispositif de détection 54 d'occurrences d'ouvertures de la porte d'accès 52. Un tel dispositif de détection 54 est monté, dans une première forme de réalisation, sur l'extrémité libre 52B de la porte d'accès 52 ou sur la paroi intérieure 41 au niveau de l'ouverture ménagée par le logement borgne 51 (du côté opposé à l'organe de liaison mécanique 53) et permet de détecter un contact ou une absence de contact entre l'extrémité libre 52B de la porte d'accès 52 et la paroi intérieure 41 du carter intermédiaire 4. Une occurrence d'absences de contact permet de déterminer le nombre d'ouvertures de la porte d'accès 52 par exemple. Dans une deuxième forme de réalisation, le dispositif de détection 54 est monté au niveau de l'organe de liaison mécanique 53 et permet de mesurer par exemple le couple du ressort, ce qui permet de détecter une ouverture de la porte d'accès 52. Il va de soi que le dispositif de détection 54 pourrait alternativement se présenter sous une forme différente. Le dispositif de détection 54 est, dans cet exemple, relié à un calculateur 9 de l'aéronef et permet d'informer le pilote du nombre d'occurrences d'ouvertures de la porte d'accès 52. Cela permet par exemple de détecter une fréquence importante d'ouvertures, signifiant une quantité importante de corps étrangers CO interceptés.

Dans une forme de réalisation, toujours en référence à la figure 4, le système d'interception 5 comprend un dispositif de mesure 55 de la masse de corps étrangers CO présents dans le logement borgne 51. De préférence, le dispositif de mesure 55 est positionné sur une surface intérieure du logement borgne 51. Dans cet exemple, le dispositif de mesure 55 se présente sous la forme d'un capteur de force apte à mesurer la pression exercée par le poids d'un ou plusieurs corps(s) étranger(s) CO sur la surface intérieure du logement borgne 51, par gravité. Le dispositif de mesure 55 est, dans cet exemple, relié au calculateur 9 de l'aéronef et permet d'informer le pilote de la présence de corps étrangers CO capturés par le système d'interception 5. Cela permet de détecter une masse importante de corps étrangers CO, indiquant par exemple qu'il est nécessaire de vider le logement borgne 51.

Il va dorénavant être décrit un procédé de capture d'un corps étranger CO dans la turbomachine 1, au moyen du système d'interception 5 décrit précédemment, en référence aux figures 4 à 7.

Dans une étape préliminaire E0, représentée sur la figure 4, la porte d'accès 52 est initialement dans la position fermée P0. Dans cet exemple, l'organe de liaison mécanique 53 comprend un ressort hélicoïdal, initialement dans l'état de repos Q0 et maintenant la porte d'accès 52 dans la position fermée P0. Pour cela, dans cet exemple, l'organe de liaison mécanique 53 possède un couple de ressort suffisamment important pour conserver la porte d'accès 52 dans la position fermée P0, même sous l'application des efforts aérodynamiques dus au premier flux d'air F1 entrant dans la portion de rétrécissement 15 de la zone intérieure Z1. En effet, comme décrit précédemment, le premier flux d'air F1 entre dans la zone intérieure Z1 selon l'axe de turbomachine X d'amont en aval. A ce titre, en entrée de la portion de rétrécissement 15 en forme de col de cygne, le premier flux d'air F1 est entrainé contre la paroi intérieure 41 du carter 4.

Un corps étranger CO traverse alors l'organe propulsif 2 et arrive en entrée de la zone intérieure Z1.

Dans une première étape E1, en référence à la figure 5, le corps étranger CO, entrainé par le premier flux d'air F1, percute la porte d'accès 52 selon une direction sensiblement parallèle à l'axe de turbomachine X. Du fait de son inertie, le corps étranger CO exerce alors un effort G sur la porte d'accès 52, l'effort G étant supérieur au couple de l'organe de liaison mécanique 53.

Dans une deuxième étape E2, en référence à la figure 6, suite à l'effort G exercé par le corps étranger CO, la porte d'accès 52 passe en position ouverte P1 et le corps étranger CO est introduit dans le logement borgne 51. En particulier, dans cet exemple, le corps étranger CO est entrainé jusqu'à atteindre le fond du logement borgne 51, c'est-à-dire jusqu'à la portion de stockage 51B.

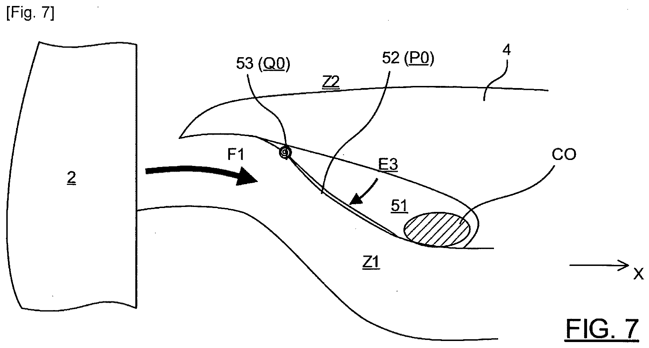

En référence à la figure 7, lorsque le corps étranger CO se trouve dans la portion de stockage 51B du logement borgne 51, ce dernier cesse d'exercer l'effort G sur la porte d'accès 52. Aucun effort ne s'oppose alors au couple de l'organe de liaison mécanique 53, qui n'est plus contraint et revient dans son état de repos Q0. De plus, le corps étrangers CO présent dans la portion de stockage 51B ne gêne en rien la fermeture de la porte d'accès 52 qui est libre de tout mouvement dans la portion de débattement 51A. La porte d'accès 52 est alors automatiquement placée dans la position fermée P0, dans une étape E3, et reforme la continuité de la paroi intérieure 41 du carter intérieur 4, ce qui permet d'assurer l'aérodynamisme de la zone intérieure Z1.

De manière avantageuse, les corps étrangers CO de trop faibles dimensions appliquent un effort G inférieur au couple de l'organe de liaison mécanique 53, ce qui maintient la porte d'accès 52 fermée et les corps étrangers CO de faibles dimensions sont ingérés sans risque d'endommagement. Cela permet d'intercepter uniquement les corps étrangers CO qui présentent un risque pour la turbomachine 1.

Dans un mode de mise en œuvre, le procédé comprend une quatrième étape de détection de plusieurs occurrences d'ouvertures de la porte d'accès 52, par le dispositif de détection 54. Un signal est alors transmis, via un calculateur 9, au pilote de l'aéronef qui détermine le nombre d'occurrences d'ouvertures de la porte d'accès 52. Ce dernier peut alors signaler un nombre important de corps étrangers CO capturés, permettant au cours d'une opération de nettoyage par exemple de vider le logement borgne 51 pour retirer tous les corps étrangers CO en prévision d'un prochain décollage.

Dans un exemple, le procédé comprend une cinquième étape de mesure, par le dispositif de mesure 55, de la masse de corps étrangers CO présents dans la portion de stockage 51B du logement borgne 51. Un signal est alors par exemple transmis, via le calculateur 9, au pilote de l'aéronef qui détermine qu'un ou plusieurs corps étrangers CO ont été capturés par le système d'interception 5. Le pilote peut alors signaler un nombre important de corps étrangers CO capturés, permettant de prévoir une opération de nettoyage par exemple pour vider le logement borgne 51 et retirer tous les corps étrangers CO.

Il est décrit une quatrième étape de détection d'occurrences d'ouvertures de la porte d'accès 52 et une cinquième étape de mesure de la masse de corps étrangers CO présents dans le logement borgne 51, cependant il va de soi que les étapes de détection et de mesure peuvent être réalisées indépendamment l'une de l'autre de manière alternative ou complémentaire.

Le système d'interception selon l'invention permet avantageusement de limiter tout risque d'ingestion, par la turbomachine, d'oiseau entier par exemple, limitant ainsi le risque d'endommagement de la turbomachine. Grâce au système d'interception selon l'invention, il est possible de capturer des corps étrangers dont l'encombrement est plus important que des débris, sans affecter l'aérodynamisme de la zone intérieure pour permettre d'assurer un rendement optimal de la turbomachine.

Grâce à un système d'interception monté directement en aval de l'organe propulsif de la turbomachine, le système permet de s'affranchir de tout risque qu'un corps étranger ne pénètre dans le compresseur, et permet ainsi d'éviter un risque d'endommagement.

## Revendications

1. Turbomachine à gaz (1) pour aéronef comprenant un carter (4) délimitant une zone intérieure (Z1) de circulation d'un premier flux d'air (F1) et une zone extérieure (Z2) de circulation d'un deuxième flux d'air (F2), le carter (4) comprenant une paroi radialement intérieure (41), délimitant extérieurement la zone intérieure (Z1), et une paroi radialement extérieure (42), délimitant intérieurement la zone extérieure (Z2), la turbomachine à gaz (1) comprenant au moins un compresseur (11), une chambre de combustion (12) et au moins une turbine (13), le premier flux d'air (F1) circulant d'un amont vers un aval selon un axe de turbomachine (X) dans la zone intérieure (Z1) au moins pour alimenter la chambre de combustion (12), le système d'interception (5) est monté dans la zone intérieure (Z1) en amont du compresseur (11), la turbomachine à gaz (1) étant **caractérisée en ce qu'**elle comprend au moins un système d'interception (5) d'au moins un corps étranger (CO) comprenant :
- un logement borgne (51) formé dans la paroi intérieure (41) du carter (4), le logement borgne (51) comprenant une portion de stockage (51B) destinée à recevoir le corps étranger (CO),
- une porte d'accès (52) au logement borgne (51), la porte d'accès (52) étant configurée pour évoluer entre :
• une position fermée (P0) dans laquelle elle forme en partie la paroi intérieure (41) du carter (4), et
• une position ouverte (P1) dans laquelle la paroi intérieure (41) du carter (4) est discontinue, permettant l'accès au logement borgne (51),
- un organe de liaison mécanique (53), reliant la porte d'accès (52) au carter (4), configuré, d'une part, pour maintenir par défaut la porte d'accès (52) dans la position fermée (P0) et, d'autre part, pour ouvrir la porte d'accès (52) dans la position ouverte (P1) suite à l'application d'un effort (G) par le corps étranger (CO) sur la porte d'accès (52).

2. Turbomachine à gaz (1) selon la revendication 1, dans laquelle la zone intérieure (Z1) se présente sous la forme d'une veine intérieure comprenant une portion de rétrécissement (15), le système d'interception (5) est monté dans le portion de rétrécissement (15).

3. Turbomachine à gaz (1) selon l'une des revendications 1 à 2, la turbomachine à gaz (1) étant exempte de vanne de décharge en amont du compresseur (11), la vanne de décharge étant configurée pour créer un canal de circulation d'un flux d'air de décharge depuis la zone intérieure (Z1) vers la zone extérieure (Z2).

4. Turbomachine à gaz (1) selon l'une des revendications 1 à 3, dans lequel l'organe de liaison mécanique (53) est un organe passif.

5. Turbomachine à gaz (1) selon l'une des revendications 1 à 4, dans lequel l'organe de liaison mécanique (53) comporte un ressort.

6. Turbomachine à gaz (1) selon la revendication 5, dans laquelle le ressort est un ressort hélicoïdale possédant un couple de ressort, le couple de ressort est compris entre 1000 et 3000 Nm.

7. Turbomachine à gaz (1) selon l'une des revendications 1 à 6, dans laquelle, en position fermée (P0), la porte d'accès (52) forme une surface aérodynamique continue avec la paroi intérieure (41) du carter (4).

8. Turbomachine à gaz (1) selon l'une des revendications 1 à 7, dans laquelle la portion de stockage (51B) comprend une capacité de stockage d'un corps étranger supérieure à 1L, de préférence supérieure à 3L.

9. Turbomachine à gaz (1) selon l'une des revendications 1 à 8, dans laquelle la portion de stockage (51B) possède une hauteur de stockage (H51B), définie radialement par rapport à l'axe de turbomachine (X), comprise entre 80 et 220mm.

10. Turbomachine à gaz (1) selon la revendication 9, dans laquelle la portion de stockage (51B) possède une longueur de stockage (L51B), définie selon l'axe de turbomachine (X), comprise entre 1 et 1,5 fois la hauteur de stockage (H51B).

11. Turbomachine à gaz (1) selon l'une des revendications 1 à 10, dans laquelle le système d'interception (5) comprend un dispositif de détection (54) d'occurrences d'ouverture de la porte d'accès (52).

12. Turbomachine à gaz (1) selon l'une des revendications 1 à 11, dans laquelle le système d'interception (5) comprend un dispositif de mesure (55) de la masse de corps étrangers (CO) présents dans le logement borgne (51).

13. Procédé de capture d'un corps étranger (CO) dans une turbomachine à gaz (1) selon l'une des revendications 1 à 12, au moyen du système d'interception (5), l'organe de liaison mécanique (53) maintenant initialement par défaut la porte d'accès (52) dans la position fermée (P0), le procédé comprend les étapes consistant à :
- appliquer (E1) un effort (G), par le corps étranger (CO), sur la porte d'accès (52), et
- déplacer (E2) la porte d'accès (52) dans la position ouverte (P1), le corps étranger (CO) étant stocké dans la portion de stockage (51B) du logement borgne (51).

14. Procédé de capture selon la revendication 13, le procédé de capture comprenant postérieurement une étape consistant à déplacer (E3) automatiquement la porte d'accès (52) dans la position fermée (P0) suite à l'arrêt de l'application de l'effort (G) par le corps étranger (CO) sur la porte d'accès (52).
